# EUROPEAN PATENT APPLICATION

(11) **EP 0 989 344 A1**
(43) Date of publication of application: **29.03.2000**
(21) Application number: 99202793.8
(22) Date of filing: 30.08.1999
(51) Int. Cl.: F16K 7/10, F16L 55/124

(54) **Shut-off device for a pipe**

(30) Priority: 31.08.1998 NL 1009970
(71) Applicant: Van Beugen Beheer B.V., 3284 AN Zuid Beijerland (NL)
(72) Inventor: Van Beugen, Freddy, 3284 AN Zuid Beijerland (NL)
(74) Representative: de Bruijn, Leendert C.

(57) **Abstract**

A device for shutting off a pipe (3) is provided with a branch (11) providing access to the pipe (3), which branch (11) at its free end bears a non-return valve (12,13) which is held in the closed position under the influence of the pressure in the pipe (3), which device comprises a tubular lance (1) which can be inserted into the branch (11) by way of the non-return valve (12,13) and an insertion lance (2) which can be slid into the tubular lance (1) in a sealing manner, which insertion lance (2) has a flexible end (6) and also an inflatable element (8), which is fastened to the insertion lance (2) near the flexible end (6), in such a way that during the insertion of the insertion lance (2) the flexible end (6) is bent in the longitudinal direction of the pipe, after which the inflatable element (8) can be inflated by way of a channel provided in the insertion lance. The insertion lance (2) bears a support (10) which extends along at least part of the flexible end (6), in order to support the latter against the gas pressure and/or the gas flow in the pipe (3).

## Description

The invention relates to a device for shutting off a pipe, which pipe is provided with a branch providing access to the pipe, which device comprises a tubular lance which can be inserted into the branch and an insertion lance which can be slid into the tubular lance in a sealing manner, which insertion lance has a flexible end and also an inflatable element, which is fastened to the insertion lance near the flexible end, in such a way that during the insertion of the insertion lance the flexible end is bent in the longitudinal direction of the pipe, after which the inflatable element can be inflated by way of a channel provided in the insertion lance.

Such a device is known from EP-A-683346. The tubular lance thereof is inserted into the branch, and is fixed by means of a screw connection. The insertion lance is then pressed further into the tubular lance, in such a way that the flexible end with the inflatable element comes to rest in the pipe to be shut off.

After the inflation, the element is exposed to the gas pressure in the pipe, since only atmospheric pressure prevails in the shut-off part of the pipe, on account of the fact that work is being carried out there. The element has to resist the gas pressure by means of the friction relative to the inside wall of the pipe, combined with the resistance supplied by the flexible end.

Pressure differences also occur on either side of the element during its inflation. In that state, i.e. before the friction relative to the pipe wall has come about, the element can only be held in the correct position by the flexible end of the insertion lance.

In particular in the case of a fully operational pipe system, in which considerable flow velocities occur, the problem arises that in the inflation phase the element cannot be held well in the desired place, i.e. slightly upstream of the branch. In that phase the element may be entrained to the position where the branch is situated, with the result that the seal can no longer be guaranteed.

The object of the invention is to provide a device which functions better in this respect. That object is achieved by the fact that the insertion lance bears a support which extends along at least part of the flexible end, in order to support the latter against the gas pressure and/or the gas flow in the pipe.

A support can now be inserted into the pipe simultaneously with the inflatable element, which support prevents the element from being forced out of the desired position during its inflation, under the influence of the gas flow and the gas pressure.

In order to ensure that the support can give the desired supporting effect also in the state in which it is projecting from the tubular lance, said support is preferably sleeve-shaped and slidable in a close-fitting or telescopic manner into the end of the tubular lance to be inserted into the pipe.

The telescopic interaction between the support and the lance guarantees that the inflatable element is stably supported.

As already stated, the flexible end is bent when the inflatable element is being inserted into the pipe. This can be achieved in a known manner by the fact that the flexible end bears an asymmetrically shaped head which determines a preferred bending direction during the insertion of the insertion lance, in such a way that the head comes to rest against the opposite inside wall of the pipe, which preferred bending direction corresponds to the direction determined by the notch.

In order to ensure that the sleeve-shaped support impedes that bending as little as possible, said support bears on its end to be inserted into the pipe a notch which extends in the axial direction from the end face of the support situated on that end.

Thanks to the notch, the flexible end can be bent normally in the desired direction, while the desired supporting effect is still provided in the opposite direction.

The support is fastened to the insertion lance in such a way that it cannot slide. In particular, the support can be fastened to a rigid part of the insertion lance, or it can be fastened to a flexible part of the insertion lance.

The support is consequently inserted into the pipe simultaneously with the insertion lance. This means that the desired supporting effect is obtained for the inflatable element directly at the time of its insertion. No separate action for placing the support in the desired position is needed, which is an advantage as regards the reliability and proper functioning of the device according to the invention.

The invention will be explained in greater detail below with reference to the figures.
Figure 1 shows the device according to the invention, partially in section.
Figure 2 shows the device when fitted.

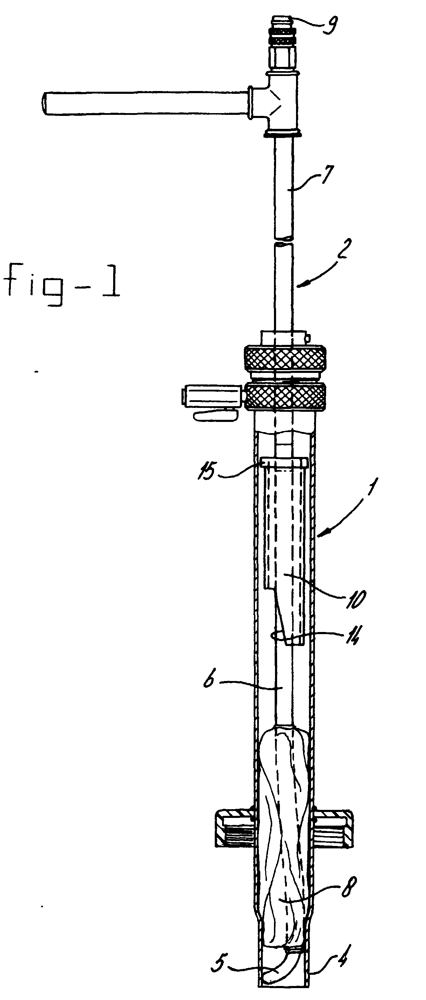

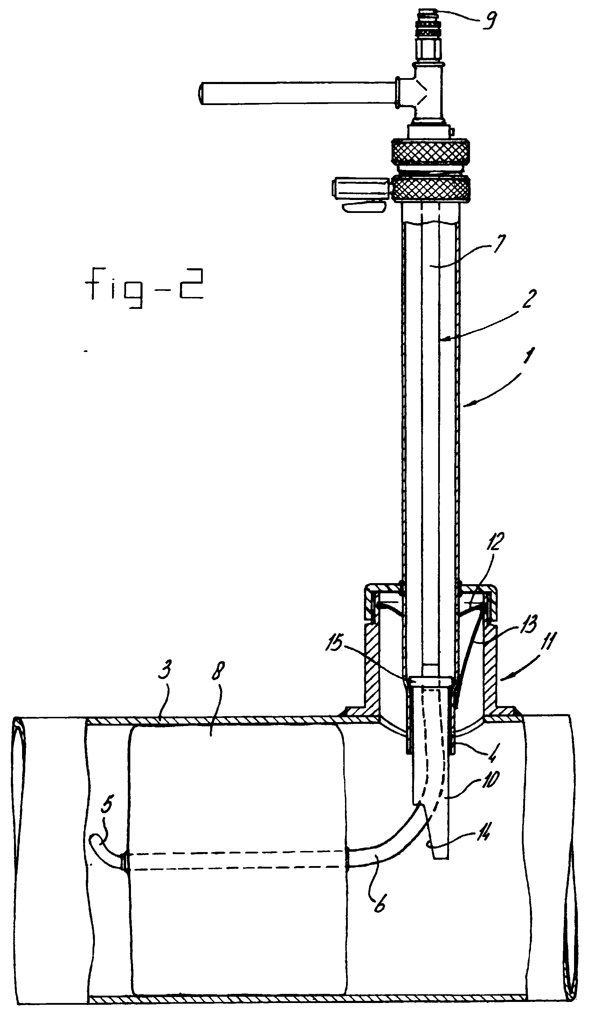

The device shown in Figures 1 and 2 comprises a tubular lance 1 which can be inserted into a pipe 3, and also an insertion lance indicated in its entirety by 2. This tubular lance 1 interacts at the top side in a sealing manner with the insertion lance 2, which can be slid in the longitudinal direction relative to the tubular lance 1. In the situation shown in Figure 1 the insertion lance 2 is fully drawn up, while in the situation shown in Figure 2 the insertion lance is fully pressed into the tubular lance 1.

The tubular lance 1 has a constricted part 4 at the bottom end.

The insertion lance has on its end an asymmetrically shaped head 5, known per se, which is connected by way of the flexible end 6 to the rigid part 7 of the insertion lance 2. The bladder, ball or balloon 8 can be inflated by way of a channel (not shown) running through the rigid part 7 and the flexible part 6. Said channel can be connected to an overpressure source by way of nipple 9.

At the fixing point of the rigid part 7 and the flexible end 6 there is a block 9, to which according to the invention the support 10, through which a part of the flexible end 6 runs, is fastened.

When the device according to the invention is being used, the narrowed end 4 of the tubular lance 1 is placed in the branch 11 of the pipe 3 to be shut off. Here the insertion lance 2 is in the position relative to the tubular lance 1 shown in Figure 1.

The branch 11 has in a known manner an annular diaphragm 12, and also a flexible valve 13. The annular diaphragm 12 and the valve 13 are made of a flexible material, for example rubber. The inside diameter of the diaphragm 12 is slightly smaller than the outside diameter of the broadest part of the tubular lance 1. During the insertion of the tubular lance 1 into the diaphragm 12 the valve 13, which was initially held against the diaphragm 12 by the gas pressure in the pipe 3, is pushed away as shown in Figure 2. However, by then the seal between the tubular lance 1 and branch 11 is already ensured by the diaphragm 12.

The insertion lance 2 is then pushed into the tubular lance 1 in a known manner, in such a way that the asymmetrically shaped head 5 comes to rest against the wall part of the pipe 3 situated opposite the branch 11.

In this process the flexible end 6 is bent in the direction shown in Figure 2.

The bladder 8 is then inflated by way of the abovementioned channel (not shown), the gas flow and gas pressure seen coming from the left in Figure 2 (see arrows) tries to press the bladder 8 to the right, past the branch 11.

At high gas pressures and gas flows in particular, there is a risk of the flexible end 6 offering too little resistance. The friction between the inflated bladder 8 and the inside wall of the pipe 3 can then also prove to be too low.

The support 10 is provided according to the invention in order to prevent the partially or fully inflated bladder 8 from moving in an undesirable way. Said support 10 fits in a close-fitting manner into the narrowed end 4 of the tubular lance 1, so that even in the extended position shown in Figure 2 it offers a sturdy support for the inflated bladder 8.

The support 10 can have a notch 14 extending from its end face in such a way that the desired bending of the flexible end 6 is permitted.

Although the support 10 is shown fastened directly to the rigid part of the insertion lance 2, it can also be fastened indirectly thereto by way of the flexible end 6.

## Claims

1. Device for shutting off a pipe (3), which pipe (3) is provided with a branch (11) providing access to the pipe (3), which device comprises a tubular lance (1) which can be inserted into the branch (11) and an insertion lance (2) which can be slid into the tubular lance (1) in a sealing manner, which insertion lance (2) has a flexible end (6) and also an inflatable element (8), which is fastened to the insertion lance (2) near the flexible end (6), in such a way that during the insertion of the insertion lance (2) the flexible end (6) is bent in the longitudinal direction of the pipe (3), after which the inflatable element (8) can be inflated by way of a channel provided in the insertion lance (2), characterized in that the insertion lance (2) bears a support (10) which extends along at least part of the flexible end (6), in order to support the latter against the gas pressure and/or the gas flow in the pipe (3).

2. Device according to Claim 1, in which the support (10) is sleeve-shaped and slidable in a close-fitting or telescopic manner into the end (4) of the tubular lance to be inserted into the pipe (3).

3. Device according to Claim 2, in which the support (10) is asymmetrical.

4. Device according to Claim 3, in which the sleeve-shaped support (10) has on its end to be inserted into the pipe (3) a notch (14) which extends in the axial direction from the end face of the support (10) situated on that end.

5. Device according to Claim 4, in which the flexible end (6) bears an asymmetrically shaped head (5) which determines a preferred bending direction during the insertion of the insertion lance (2), in such a way that the head (5) comes to rest against the opposite inside wall of the pipe (3), which preferred bending direction corresponds to the preferred bending direction determined by the notch (14).

6. Device according to one of the preceding claims, in which the inflatable element (8) is situated around the flexible end (6), at a distance from the support (14).

7. Device according to one of the preceding claims, in which the support (10) is fastened to the insertion lance (2) in such a way that it cannot slide.

8. Device according to Claim 7, in which the support (10) is fastened to a rigid part (7) of the insertion lance (2).

9. Device according to Claim 7 or 8, in which the support (10) is fastened to a flexible part (6) of the insertion lance (2).

10. Device according to one of the preceding claims, in which at its free end the branch (11) bears a non-return valve (12, 13) which is held in the closed position under the influence of the pressure in the pipe (3), in such a way that the tubular lance (1) can be inserted into the branch by way of the non-return valve (12, 13).

11. Device according to Claim 10, in which the non-return valve comprises a valve seat in the form of a flexible ring (12) which extends radially into the branch (11), and the inside diameter of the ring (12) is smaller than the outside diameter of the tubular lance (1), in such a way that the inserted tubular lance (1) is sealed off relative to the valve seat (12), and also comprises a flexible valve element (13) which rests against the valve seat (12).
